# FASCICULE DE BREVET EUROPEEN

(11) **EP 1 475 535 B1**
(45) Date de publication et mention de la délivrance du brevet: **06.10.2010**
(21) Numéro de dépôt: 04291149.5
(22) Date de dépôt: 04.05.2004
(51) Int. Cl.: F04B 41/06, F04B 49/08, F04D 19/04, G05D 16/20

(54) **Contrôle de pression dans la chambre de procédés par variation de vitesse de pompes, vanne de régulation et injection de gaz neutre**
Druckregelungssystem für Prozesskammer auf der Basis der Pumpengeschwindigkeit, der Ventilöffnung und Neutralgasinjektion
Control system for process chamber pressure based on pump speed, valve opening and neutral gas injection

(30) Priorité: 09.05.2003 FR 0305615
(43) Date de publication de la demande: 10.11.2004
(73) Titulaire: Alcatel Lucent, 75008 Paris (FR)
(72) Inventeur: Bernard, Roland, 74540 Viuz-la-Chiesaz (FR); Desbiolles, Jean-Pierre, 74350 Cruseilles (FR); Munari, Sébastien, 74960 Cran-Gevrier (FR); Rousseau, Claude, 74940 Annecy le Vieux (FR)
(74) Mandataire: Korakis-Ménager, Sophie

(56) Documents cités:
- WO-A-99/04325
- DD-A- 262 065
- DE-A- 10 043 783
- US-B1- 6 419 455

## Description

L'invention présentée dans ce document concerne le pilotage de la pression gazeuse dans une chambre de procédés utilisée notamment dans l'industrie des semi-conducteurs.

Les procédés de fabrication des semi-conducteurs et des systèmes mécaniques microélectroniques (MEMS) comprennent généralement des étapes successives qui se déroulent dans une chambre de procédés sous atmosphère à faible pression. Chaque étape est caractérisée par une pression gazeuse qu'il faut réguler, par exemple pour l'entretien d'un plasma ou d'un bombardement de particules qui agit sur un substrat en semi-conducteur.

Certaines étapes comprennent l'injection simultanée de gaz de traitement dans la chambre de procédés.

La plupart des étapes de procédé se réalisent en présence d'un vide approprié, généré et maintenu par une ligne de vide comprenant des pompes à vide raccordées à la chambre de procédés.

De façon traditionnelle, on a contrôlé la pression dans les chambres de procédés par la manoeuvre d'une vanne de régulation placée directement en sortie de la chambre avant la pompe secondaire et la pompe primaire. Un problème est alors le risque d'encrassement de la vanne de régulation, et le risque de pollution rétro diffusée depuis la vanne de régulation vers la chambre de procédés.

Une solution à ce problème, consistant dans la commande de vitesse simultanément de la pompe primaire et de la pompe secondaire, a fait l'objet d'un brevet US 6,419,455. Des difficultés apparaissent lorsque la pompe primaire est distante, séparée de la pompe secondaire par une canalisation relativement longue. Le temps de réponse de la régulation est alors trop long.

On connaît également du document WO 99 04 325 un grand nombre de solutions plus ou moins complexes, mettant en oeuvre :
- tantôt le contrôle de vitesse de la pompe primaire avec une injection de gaz neutre en amont de la pompe primaire et en aval d'une vanne de sortie de pompe secondaire,
- tantôt une injection de gaz neutre en amont d'une vanne de commande connectée à l'entrée d'une pompe primaire non pilotée en vitesse.

Mais ce document ne décrit pas de solution dans laquelle une vanne de régulation est engagée entre une pompe primaire et une pompe secondaire, la pompe primaire étant commandée en vitesse, et un gaz neutre étant injecté en amont de la vanne de régulation. Et ce document ne décrit pas de solution dans laquelle une pompe secondaire est commandée en vitesse.

Une difficulté dans le contrôle de l'atmosphère des chambres de procédés de fabrication de composants microtechniques et microélectroniques est la grande variété des étapes d'usinage par plasma ou autre élément gazeux, et la grande diversité des conditions physiques de l'atmosphère présente dans la chambre de procédés. Le dispositif de contrôle doit suivre ces variations, qui ont une amplitude relativement large. Il faut en outre que le dispositif de contrôle suive rapidement les variations, afin d'assurer des étapes d'usinage correctes qui respectent, du début à la fin de l'étape, les conditions d'usinage appropriées. A défaut, l'étape d'usinage ne peut commencer qu'après stabilisation de l'atmosphère dans la chambre de procédés, ce qui réduit les cadences de fabrication et augmente le coût de production.

Les documents de l'art antérieur ne donnent pas un enseignement satisfaisant pour atteindre une vitesse de réaction et une gamme de réglage appropriées pour toutes les étapes nécessaires.

Ainsi, l'invention vise à la fois à éviter les inconvénients des systèmes de l'art antérieur, en permettant en particulier de réduire de façon sensible le temps de réponse de régulation du système et les risques d'instabilité, et d'accroître la gamme de réglage, tout en évitant simultanément les risques de pollution rétrograde qui pourraient résulter de la présence d'une vanne de commande en sortie de chambre de procédés.

L'invention vise ainsi à remplacer la vanne de régulation de sortie de chambre par des moyens satisfaisants qui procurent une amplitude et une vitesse de réaction appropriées même en présence d'une canalisation longue entre les pompes primaire et secondaire.

L'invention vise en outre à garantir une stabilité de régulation satisfaisante, évitant l'apparition des instabilités que l'on rencontre fréquemment dans les systèmes régulés lorsqu'on cherche à accroître l'amplitude et la vitesse de réaction.

L'idée essentielle de l'invention est de réaliser une régulation par trois moyens complémentaires dont les vitesses de réaction se complètent :
- une commande de vitesse de pompe primaire et/ou secondaire, qui permet de réagir aux tendances à très long terme ;
- une injection de gaz neutre pilotée en débit, placée en amont d'une vanne de régulation elle-même en amont de la pompe primaire, pour réagir aux tendances à moyen terme ;
- la vanne de régulation pilotée en ouverture, qui assure une réaction rapide lorsqu'elle est placée dans les conditions appropriées de fonctionnement grâce à l'injection de gaz et à la régulation de vitesse de pompe primaire.

Pour atteindre ces objets ainsi que d'autres, l'invention propose un système de pompage des gaz d'une chambre de procédés, comprenant une pompe primaire, une pompe secondaire, un dispositif d'injection de gaz neutre, et une vanne de régulation, dans lequel :
- la pompe primaire et/ou secondaire est commandée en vitesse,
- la vanne de régulation, commandée en ouverture, est connectée à l'entrée de la pompe primaire,
- l'injection de gaz neutre, commandée en débit, est assurée en amont de la vanne de régulation.

La combinaison de ces éléments donne une grande souplesse de réglage, permettant d'atteindre une grande vitesse de réaction et une grande plage de réglages possibles.

L'invention s'applique de préférence à une pompe secondaire commandée en vitesse du type pompe turbo, pompe moléculaire ou pompe turbomoléculaire.

Selon un mode de réalisation préféré, la vanne de régulation est pilotée de façon à compenser les variations rapides et de faible amplitude des conditions de pression et de débit d'injection de gaz dans la chambre de procédés, puis l'injection de gaz neutre est pilotée de façon à compenser les variations de plus forte amplitude des conditions de pression et de débit d'injection de gaz dans la chambre de procédés, et enfin la vitesse de la pompe primaire et/ou secondaire est pilotée de façon à compenser les tendances à plus long terme et les grandes variations d'amplitude des conditions de pression et de débit d'injection de gaz dans la chambre de procédés.

Dans ce cas, la vitesse de la pompe primaire et/ou secondaire et l'injection de gaz sont de préférence déterminées de façon à placer la vanne de régulation en une position moyenne d'ouverture intermédiaire appropriée, qui est fonction de la vanne choisie. L'homme du métier adaptera la position moyenne de la vanne de régulation en fonction des courbes de réponse fournies par le constructeur de la vanne. Il placera ainsi la vanne de régulation dans la position moyenne qui procure la sensibilité de réaction la plus appropriée de la vanne sur le fluide commandé en fonction de sa position.

Egalement, l'homme du métier choisira d'adapter préférentiellement les vitesses de pompe ou l'injection de gaz en fonction de la sensibilité désirée de la régulation, en privilégiant une adaptation d'injection de gaz pour réaliser une grande sensibilité de régulation, ou en privilégiant une adaptation d'injection de gaz et de vitesse de pompe pour réduire la sensibilité de régulation.

Selon un mode de réalisation pratique, le système de pompage selon l'invention peut être tel que :
- la pompe primaire et/ou secondaire est connectée à des moyens de commande pour piloter la pompe primaire et/ou secondaire à vitesse réglable,
- la vanne de régulation est associée à des moyens de commande pour piloter la vanne de régulation,
- l'injection de gaz neutre injecte un gaz neutre à partir d'une source de gaz neutre par une canalisation d'injection munie d'une vanne d'injection et de moyens de commande pour piloter la vanne d'injection,
- un moyen de commande central tel qu'un microprocesseur ou un microcontrôleur pilote les moyens de commande respectifs de la pompe primaire et/ou de la pompe secondaire, de la vanne de régulation et de la vanne d'injection.

De préférence, le moyen de commande central génère les signaux qui pilotent les moyens de commande respectifs en fonction d'un signal de consigne reçu d'une consigne, en fonction d'informations sur la position d'ouverture des vannes de régulation et d'injection, et en fonction de mesures de la pression de chambre de procédés émises par un capteur de pression.

L'invention peut avantageusement être appliquée à la réalisation d'une installation de fabrication de semi-conducteurs ou de systèmes mécaniques microélectroniques (MEMS).

Selon un autre aspect, l'invention propose un procédé de fabrication de semi-conducteurs ou de systèmes mécaniques microélectroniques (MEMS), dans lequel on pompe l'atmosphère intérieure d'une chambre de procédés à l'aide d'un système de pompage.

De préférence, on pilote la vanne de régulation en ouverture de façon à compenser les variations rapides et de faible amplitude des conditions de pression et de débit d'injection de gaz dans la chambre de procédés, puis on pilote l'injection de gaz neutre en débit de façon à compenser les variations de plus forte amplitude des conditions de pression et de débit d'injection de gaz dans la chambre de procédés, et on pilote en vitesse la pompe primaire et/ou secondaire de façon à compenser les tendances à plus long terme et les grandes variations d'amplitude des conditions de pression et de débit d'injection de gaz dans la chambre de procédés.

D'autres objets, caractéristiques et avantages de la présente invention ressortiront de la description suivante de modes de réalisation particuliers, faite en relation avec les figures jointes, parmi lesquelles:
- la figure 1a) est un diagramme temporel illustrant un exemple de variation de la consigne de pression dans une chambre de procédés en sccm (standard cubic centimeters per minute) (1mbar = 55,18sccm à 20°C), et la variation de la pression réelle ;
- la figure 1b) est un exemple de variation simultanée des flux de gaz introduits dans la chambre de procédés lors d'un traitement ;
- la figure 1c) montre ensuite une courbe de variation d'ouverture d'une vanne pour suivre les variations de faible amplitude de pression et de flux dans la chambre de procédés ;
- la figure 1d) illustre une courbe de variation de l'injection de gaz qu'il faut piloter pour suivre les tendances à plus long terme ou les variations de plus forte amplitude ;
- la figure 1e) illustre une courbe de variation de la vitesse de la pompe primaire ;
- la figure 2 est une vue schématique d'un dispositif de commande de pression dans une chambre de procédés selon un mode de réalisation de la présente invention ; et
- la figure 3 illustre la courbe de sensibilité de régulation, en fonction de l'ouverture de la vanne, pour différentes conditions de flux et de vitesse de pompe.

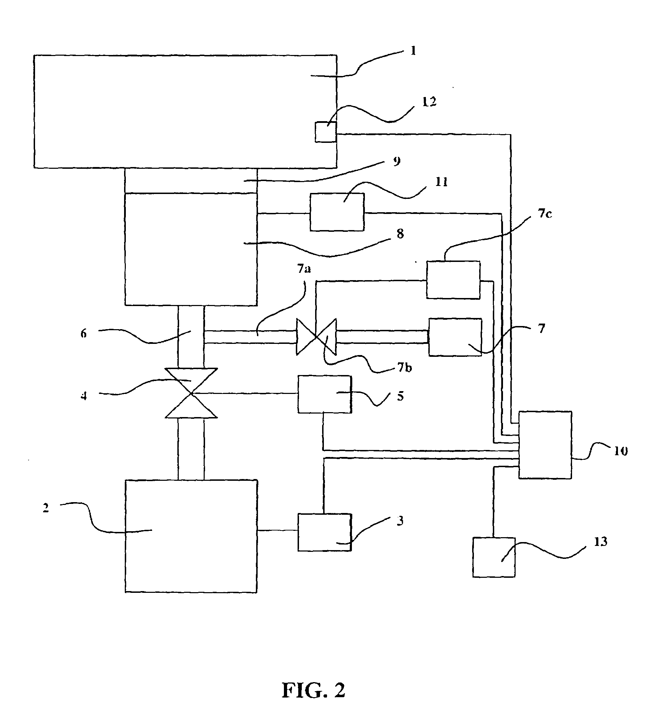

Dans le mode de réalisation illustré sur la figure 2, dans une ligne de vide pour commander le vide d'une chambre de procédés 1, on prévoit une pompe primaire 2 connectée à des moyens 3 pour piloter la pompe primaire 2 à vitesse réglable. On prévoit une vanne de régulation 4 à l'entrée de la pompe primaire 2, associée à des moyens 5 pour piloter la vanne de régulation 4. Et on prévoit une injection de gaz neutre 6 pilotée en débit, injectant le gaz neutre en amont de la vanne de régulation 4 à partir d'une source de gaz neutre 7 par une canalisation d'injection 7a munie d'une vanne d'injection 7b et de moyens 7c pour piloter la vanne d'injection 7b. La pompe primaire 2 est raccordée à une pompe secondaire 8, qui est elle-même raccordée à la chambre de procédés 1 avec interposition éventuelle d'une vanne d'isolement 9. La pompe secondaire 8 est elle-même connectée à des moyens 11 pour piloter la pompe secondaire 8 à vitesse réglable.

Les moyens 3 et 11 pour piloter respectivement la pompe primaire 2 et la pompe secondaire 8 définissent la vitesse de rotation de la pompe primaire 2 ou secondaire 8, et la stabilisent à une valeur déterminée qui sera expliquée ultérieurement. De même, les moyens 7c pour piloter l'injection de gaz neutre 6 définissent le débit de gaz neutre injecté en amont de la vanne de régulation 4 selon un débit approprié qui sera défini ultérieurement. Enfin, les moyens 5 pour piloter la vanne de régulation définissent une position d'ouverture appropriée de la vanne de régulation 4.

Pour une vitesse donnée de la pompe primaire 2 et/ou secondaire 8, les moyens d'injection de gaz neutre 6 sont programmés de façon à injecter une quantité de gaz neutre permettant de réaliser une pression gazeuse moyenne appropriée en aval de la pompe secondaire 8, et pour réaliser ainsi une pression moyenne dans la chambre de procédés 1 qui correspond à la pression moyenne nécessaire de l'étape du procédé en cours, pour une position moyenne de la vanne de régulation qui est intermédiaire dans une zone de sensibilité appropriée de réglage.

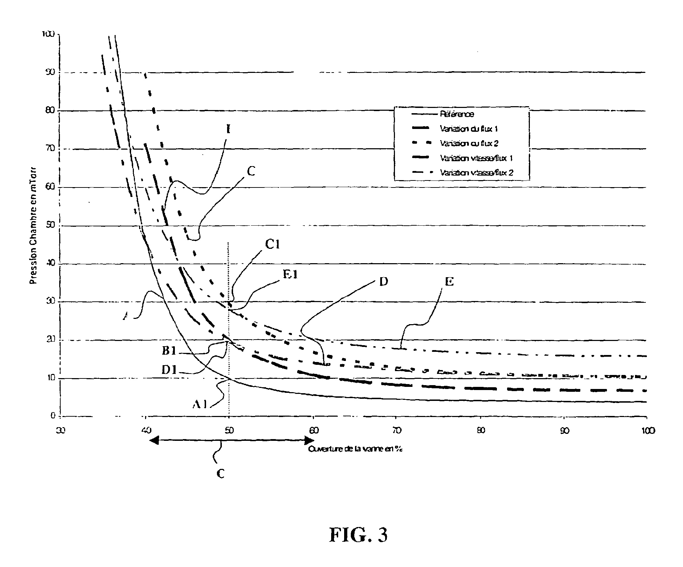

La sensibilité de réglage de la vanne de régulation est illustrée par la courbe A sur la figure 3, qui représente la pente de variation de la pression dans la chambre de procédés 1 en fonction de la position d'ouverture de la vanne de régulation 4 pour une pression aval donnée. On place de préférence la vanne de régulation 4 en une position d'ouverture intermédiaire dans la plage O de 40 % à 60 % correspondant à une pente de variation satisfaisante de la fonction de transfert combinée de la vanne et de la pompe secondaire 8.

Au cours des étapes des procédés, la pression moyenne dans la chambre de procédés, et le débit moyen des gaz injectés dans la chambre de procédés, peuvent varier. Pour suivre cette variation de pression et de débit moyen, il faudrait faire varier de façon conséquente le débit d'injection de gaz neutre en amont de la vanne de régulation 4. Pour éviter d'atteindre des débits trop élevés ou des débits nuls, les moyens 3 et/ou 11 pour piloter la pompe primaire 2 et/ou secondaire 8 à vitesse réglable adaptent la vitesse de la pompe primaire 2 et/ou secondaire 8 afin de pouvoir réaliser une pression moyenne appropriée à l'entrée de la pompe primaire 2 pour un débit de gaz neutre 6 moyen et pour une ouverture moyenne de la vanne de régulation 4.

En outre, grâce au réglage satisfaisant et surtout aux possibilités étendues de réglage, on peut assurer une régulation rapide dans une plage de variation très étendue des conditions présentes dans la chambre de procédés 1.

On peut combiner les moyens de régulation d'injection de gaz neutre et de commande de vanne de régulation 4 avec une régulation de vitesse de pompe primaire 2 seule, ou avec une régulation de vitesse de pompe secondaire 8 seule, ou avec une régulation de vitesse des deux pompes primaire 2 et secondaire 8. Cette dernière possibilité permet d'augmenter encore la plage de variation possible des conditions régnant dans la chambre de procédés, et permet d'augmenter encore la vitesse de réaction de la commande.

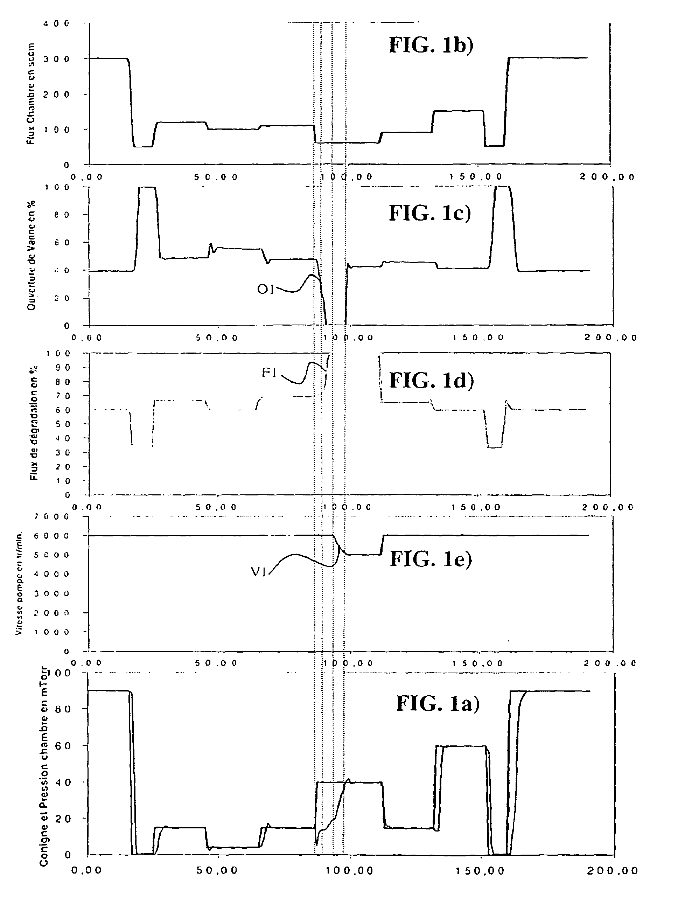

Les figures 1a à 1e illustrent un exemple de variation temporelle des conditions de fonctionnement d'un système de contrôle de pression dans une chambre de procédés selon un mode de réalisation de l'invention.

Sur la figure 1a, on a représenté d'une part la consigne de pression dans une chambre de procédés, au cours d'une séquence de procédé prise à titre d'exemple. On remarque que la pression de consigne part d'une valeur relativement élevée, de l'ordre de 90 mTorr puis chute très bas pour remonter ensuite à une vingtaine de mTorr pendant un palier jusqu'à l'indication temporelle 50,00, pour chuter très bas pendant un palier et remonter ensuite à une vingtaine de mTorr. La pression de consigne remonte ensuite à une quarantaine de mTorr au voisinage de l'indication temporelle 100,00, chutant ensuite à un palier bas et remontant ensuite à un palier à une soixantaine de mTorr pour chuter très bas et remonter ensuite à environ 90 mTorr.

Sur cette même figure 1a, on a illustré la pression réellement réalisée dans la chambre de procédés, et l'on voit que la pression chute rapidement lors des échelons négatifs de la pression de consigne, mais augmente plus lentement lors des échelons positifs de la pression de consigne.

La figure 1b illustre les variations simultanées du flux de gaz de traitement introduit dans la chambre de procédés, ce flux venant parfois contrarier les variations de consigne de pression. Le système de pompage doit évacuer ce flux de gaz de procédés pour suivre la consigne de pression.

La figure 1c illustre les variations d'ouverture de la vanne de régulation 4.

La figure 1d illustre les variations du débit d'injection de gaz neutre en amont de la vanne de régulation 4, tandis que la figure 1e illustre les variations de vitesse de la pompe secondaire.

On peut considérer notamment les événements qui interviennent au voisinage de l'indication temporelle 100,00. Il y a alors simultanément une décroissance du flux d'injection de gaz de traitement dans la chambre de procédés (figure 1b) et une augmentation de la consigne de pression dans la chambre de procédés (figure 1a). Pour réaliser la pression désirée dans la chambre de procédés, on commence alors par fermer rapidement la vanne de régulation 4, comme l'indique l'échelon négatif O1 sur la figure 1c. Simultanément, ou en léger différé comme illustré sur les figures, on augmente rapidement le flux d'injection de gaz neutre 6 en amont de la vanne de régulation 4, comme l'indique l'échelon positif F1. Etant donné que les variations de flux d'injection et d'ouverture de vanne ne suffisent pas pour suivre l'échelon positif de consigne de pression en présence d'une diminution de flux de gaz de traitement dans la chambre de procédés, on complète par une variation de vitesse de pompe, comme l'indique l'échelon négatif V1. Le système réagit correctement grâce aux trois variations d'ouverture de vanne O1, de flux d'injection F1 et de vitesse de pompe V1. C'est ainsi que l'invention permet de suivre des variations à grande amplitude.

Un second intérêt de l'invention est expliqué maintenant en relation avec la figure 3, montrant la façon par laquelle on peut agir, par le choix des éléments régulés, sur la sensibilité de régulation globale du système.

Sur cette figure, la courbe A illustre une courbe de transfert ou variation de pression de la chambre de procédés 1 pour diverses positions d'ouverture de la vanne de régulation 4, dans des conditions données et constantes de vitesse des pompes 2 et 8 et de flux d'injection de gaz neutre 6 en amont de la vanne de régulation 4. On comprend, sur cette courbe A, que l'on a intérêt à placer la vanne de régulation 4 dans une position d'ouverture intermédiaire, avantageusement entre 40 % et 60 % d'ouverture, afin de conserver une sensibilité suffisante mais pas trop élevée.

La courbe B illustre le déplacement de la courbe de transfert A vers les plus hautes pressions en présence d'une variation du flux d'injection de gaz neutre 6 en amont de la vanne de régulation 4. La courbe B reste relativement parallèle à la courbe A. De même, la courbe C illustre le déplacement de la courbe de transfert A vers les hautes pressions pour une variation supplémentaire du flux d'injection de gaz neutre 6 en amont de la vanne de régulation 4.

La courbe D illustre la déformation de la courbe de transfert dans le cas où l'on fait varier à la fois le flux d'injection de gaz neutre en amont de la vanne de régulation 4 et la vitesse de la pompe primaire 2. Enfin, la courbe E illustre la déformation de la courbe de transfert dans le cas où on fait varier également la vitesse de la pompe primaire 2 et le flux d'injection de gaz neutre 6 en amont de la vanne de régulation 4, pour un flux d'injection supérieur.

Une interprétation de ces courbes est la suivante : si l'on se place par exemple à une ouverture moyenne de la vanne à 50 %, une augmentation progressive du flux d'injection de gaz neutre 6 en amont de la vanne de régulation 4 fait déplacer la courbe de transfert d'un point A1 vers un point B1 puis vers un point C1 des courbes respectives A, B et C. On remarque qu'au point B1 la pente de la courbe B est plus forte qu'au point A1 sur la courbe A, et elle est encore plus forte au point C1 sur la courbe C. Cela signifie que, par l'augmentation du flux d'injection de gaz neutre 6 en amont de la vanne de régulation 4, on augmente progressivement la sensibilité de la régulation. Dans certains cas, cela peut conduire à des instabilités, par excès de gains de réaction.

Si l'on considère maintenant, toujours pour une ouverture à 50 % de la vanne, le point D1 sur la courbe D, et le point E1 sur la courbe E, on constate alors que les courbes D et E présentent une pente très inférieure, pour les mêmes conditions de pression dans la chambre de procédés. Ainsi, en choisissant de faire varier également la vitesse de la pompe primaire, pour se placer sur les courbes D et E, on peut réduire la sensibilité de régulation et se placer ainsi dans une zone de stabilité améliorée.

On peut ainsi mettre à profit les moyens de l'invention pour adapter préférentiellement les vitesses de pompe ou l'injection de gaz neutre en fonction de la sensibilité désirée de la régulation. Une vitesse de pompe constante permet de réaliser une plus grande sensibilité de régulation par la seule adaptation d'injection de gaz en complément de l'ouverture de la vanne de régulation 4. Par contre, une modification de vitesse de pompe en même temps que l'adaptation d'injection de gaz neutre 6 en amont de la vanne de régulation 4 permet de réduire la sensibilité de régulation pour améliorer la stabilité de la régulation.

En se référant à nouveau à la figure 2, on a illustré schématiquement une organisation pratique des moyens de commande des différents organes de la ligne de vide selon l'invention.

Les moyens de commande 5 et 7c pour les vannes respectives 4 et 7b peuvent être des interfaces électromagnétiques qui déplacent mécaniquement les moyens d'obturation des vannes respectives, en fonction d'une consigne reçue d'un moyen de commande central 10 tel qu'un microprocesseur ou un microcontrôleur auquel ils sont connectés. Le même microprocesseur ou microcontrôleur 10 pilote l'alimentation électrique de la pompe primaire 2 et/ou secondaire 8 par l'intermédiaire du moyen de commande 3 et/ou 11 respectif constitué d'une commande d'alimentation et auquel le moyen de commande central 10 est connecté.

Le moyen de commande central 10 tel que le microprocesseur ou microcontrôleur peut éventuellement recevoir des informations sur la position d'ouverture des vannes de régulation 4 et d'injection 7b et sur la vitesse de la ou des pompes primaire 2 et/ou secondaire 8, par des capteurs non représentés sur la figure. On peut également prévoir un capteur de flux d'injection dans la canalisation 7a. Le microcontrôleur reçoit également les signaux de mesure de pression dans la chambre de procédés 1 émis par un capteur de pression 12, et le signal de consigne de pression généré par une consigne 13.

En alternative, le moyen de commande central 10 peut émettre des signaux de commande en boucle ouverte, sans recevoir de signaux de mesure.

La présente invention n'est pas limitée aux modes de réalisation qui ont été explicitement décrits, mais elle en inclut les diverses variantes et généralisations qui sont à la portée de l'homme du métier en vue des revendications.

## Revendications

1. Système de pompage des gaz d'une chambre de procédés (1) comprenant une pompe primaire (2), une pompe secondaire (8), un dispositif d'injection de gaz neutre (6) et une vanne de régulation (4) dans lequel
- la vanne de régulation (4), commandée en ouverture, est connectée à l'entrée de la pompe primaire (2), et
- l'injection de gaz neutre (6), commandée en débit, est assurée en amont de la vanne de régulation (4),
**caractérisé en ce que :**
- la pompe primaire (2) et/ou secondaire (8) est commandée en vitesse.

2. Système de pompage selon la revendication 1, dans lequel la vanne de régulation (4) est pilotée de façon à compenser les variations rapides et de faible amplitude des conditions de pression et de débit d'injection de gaz dans la chambre de procédés (1), puis l'injection de gaz neutre (6) est pilotée de façon à compenser les variations de plus forte amplitude des conditions de pression et de débit d'injection de gaz dans la chambre de procédés (1), et enfin la vitesse de la pompe primaire (2) et/ou secondaire (8) est pilotée de façon à compenser les tendances à plus long terme et les grandes variations d'amplitude des conditions de pression et de débit d'injection de gaz dans la chambre de procédés (1).

3. Système de pompage selon la revendication 2, **caractérisé en ce que** la vitesse de la pompe primaire (2) et/ou secondaire (8) et l'injection de gaz neutre (6) sont déterminées de façon à placer la vanne de régulation (4) en une position moyenne d'ouverture intermédiaire appropriée dans laquelle la vanne de régulation a une sensibilité de réaction appropriée.

4. Système de pompage selon l'une quelconque des revendications 1 à 3. **caractérisé en ce que :**
- la pompe primaire (2) et/ou secondaire (8) est connectée à des moyens de commande (3 ou 11) pour piloter la pompe primaire (2) et/ou secondaire (8) à vitesse réglable,
- la vanne de régulation (4) est associée à des moyens de commande (5) pour piloter la vanne de régulation (4),
- l'injection de gaz neutre (6) injecte un gaz neutre à partir d'une source de gaz neutre (7) par une canalisation d'injection (7a) munie d'une vanne d'injection (7b) et de moyens de commande (7c) pour piloter la vanne d'injection (7b),
- un moyen de commande central (10) tel qu'un microprocesseur ou un microcontrôleur pilote les moyens de commande respectifs (3, 11, 5, 7c) de la pompe primaire (2) et/ou de la pompe secondaire (8), de la vanne de régulation (4) et de la vanne d'injection (7b).

5. Système de pompage selon la revendication 4, **caractérisé en ce que** le moyen de commande central (10) génère les signaux qui pilotent les moyens de commande respectifs (3, 11, 5, 7c) en fonction d'un signal de consigne reçu d'une consigne (13), en fonction d'informations sur la position d'ouverture des vannes de régulation (4) et d'injection (7b), et en fonction de mesures de la pression de chambre de procédés (1) émises par un capteur de pression (12).

6. Installation de fabrication de semi-conducteurs ou de systèmes mécaniques microélectroniques (MEMS), comprenant au moins une chambre de procédés (1) et un système de pompage selon l'une quelconque des revendications 1 à 5.

7. Procédé de fabrication de semi-conducteurs ou de systèmes mécaniques microélectroniques (MEMS), dans lequel on pompe l'atmosphère intérieure d'une chambre de procédés (1) à l'aide d'un système de pompage selon l'une quelconque des revendications 1 à 5.

8. Procédé selon la revendication 7, **caractérisé en ce qu'**on pilote la vanne de régulation (4) en ouverture de façon à compenser les variations rapides et de faible amplitude des conditions de pression et de débit d'injection de gaz dans la chambre de procédés (1), puis on pilote l'injection de gaz neutre (6) en débit de façon à compenser les variations de plus forte amplitude des conditions de pression et de débit d'injection de gaz dans la chambre de procédés (1), et on pilote en vitesse la pompe primaire (2) et/ou secondaire (8) de façon à compenser les tendances à plus long terme et les grandes variations d'amplitude des conditions de pression et de débit d'injection de gaz dans la chambre de procédés (1).

## Claims

1. A gas pumping system for a process chamber (1) comprising a primary pump (2), a secondary pump (8), a device for injecting inert gas (6) and a control valve (4), in which
- the control valve (4), controlled with regard to opening, is connected to the inlet of the primary pump (2), and
- the injection of inert gas (6), controlled with regard to flow rate, is ensured upstream of the control valve (4),
**characterised in that** the primary pump (2) and/or secondary pump (8) is/are controlled with regard to speed.

2. A pumping system according to claim 1, in which the control valve (4) is driven in such a manner as to compensate for the rapid, low amplitude variations in the pressure and gas injection flow rate conditions in the process chamber (1), then the injection of inert gas (6) is driven in such a manner as to compensate for the variations of greater amplitude in the pressure and gas injection flow rate conditions in the process chamber (1), and finally the speed of the primary pump (2) and/or secondary pump (8) is driven in such a manner as to compensate for longer term trends and major variations in amplitude of the pressure and gas injection flow rate conditions in the process chamber (1).

3. A pumping system according to claim 2, **characterised in that** the speed of the primary pump (2) and/or secondary pump (8) and the injection of inert gas (6) are determined in such a manner as to place the control valve (4) in a suitable middle, intermediate opening position in which the control valve exhibits suitable responsiveness.

4. A pumping system according to any one of claims 1 to 3, **characterised in that**:
- the primary pump (2) and/or secondary pump (8) is/are connected to control means (3 or 11) for driving the primary pump (2) and/or secondary pump (8) at an adjustable speed,
- the control valve (4) is associated with control means (5) for driving the control valve (4),
- the injection of inert gas (6) injects an inert gas from a source of inert gas (7) via an injection duct (7a) fitted with an injection valve (7b) and control means (7c) for driving the injection valve (7b).
- a central control means (10) such as a microprocessor or a microcontroller drives the respective control means (3, 11, 5, 7c) of the primary pump (2) and/or of the secondary pump (8), of the control valve (4) and of the injection valve (7b).

5. A pumping system according to claim 4, **characterised in that** the central control means (10) generates the signals which drive the respective control means (3, 11, 5, 7c) depending on a setpoint signal received from a setpoint (13), depending on information relating to the opening position of the control (4) and injection (7b) valves, and depending on measurements of the pressure in the process chamber (1) emitted by a pressure sensor (12).

6. An installation for manufacturing semiconductors or micropelectro-mechanical systems (MEMS), comprising at least one process chamber (1) and one pumping system according to any one of claims 1 to 5.

7. A method of manufacturing semiconductors or micro-electromechanical systems (MEMS), in which the atmosphere inside a process chamber (1) is pumped by means of a pumping system according to any one of claims 1 to 5.

8. A method according to claim 7, **characterized in that** the control valve (4) is driven with regard to opening in such a manner as to compensate the rapid, low amplitude variations in the pressure and gas injection flow rate conditions in the process chamber (1), then the injection of inert gas (6) is driven in such a manner as to compensate for the variations of greater amplitude in the pressure and gas injection flow rate conditions in the process chamber (1), and the speed of the primary pump (2) and/or secondary pump (8) is driven in such a manner as to compensate longer term trends and major variations in amplitude of the pressure and gas injection flow rate conditions in the process chamber (1).

## Patentansprüche

1. Pumpsystem für Gase einer Prozesskammer (1), umfassend eine primäre Pumpe (2), eine sekundäre Pumpe (8), eine Vorrichtung zum Einspritzen von neutralem Gas (6) und ein Regelventil (4),
wobei
- das Regelventil (4) mit geregelter Öffnung an den Eingang der primären Pumpe (2) angeschlossen ist, und
- die Einspritzung von neutralem Gas (6) mit geregelter Einspritzmenge stromaufwärts vor dem Regelventil (4) erfolgt,
**dadurch gekennzeichnet, dass** die Drehzahl der primären (2) und/oder die sekundäre (8) Pumpe geregelt ist.

2. Pumpsystem nach Anspruch 1, wobei das Regelventil (4) derart gesteuert wird, dass die schnellen Veränderungen mit kleiner Amplitude der Druck- und Einspritzmensenverhältnisse des Gases in der Prozesskammer (1) kompensiert werden, und dass anschließend die Einspritzvorrichtung für neutrales Gas (6) derart geregelt wird, dass die Veränderungen mit größerer Amplitude der Druck- und Einspritzmengenverhältnisse des Gas in der Prozesskammer (1) kompensiert werden, und dass schließlich die Drehzahl der primären (2) und/oder der sekundären (8) Pumpe derart gesteuert wird, dass die längerfristigen Tendenzen und die großen Amplitudenveränderungen der Druck- und Einspritzmengenverhältnisse des Gases in der Prozesskammer (1) kompensiert werden.

3. Pumpsystem nach Anspruch 2, **dadurch gekennzeichnet, dass** die Drehzahl der primären (2) und/oder der sekundären (8) Pumpe und die Einspritzung des neutralen Gases (6) derart bestimmt werden, dass das Regelventil (4) in eine geeignete mittlere Öffnungsposition versetzt wird, in welcher das Regelventil eine geeignete Ansprechempfindlichkeit aufweist.

4. Pumpsystem nach einem beliebigen der Ansprüche 1 bis 3, **dadurch gekennzeichnet, dass**:
- Die primäre (2) und/oder die sekundäre (8) Pumpe an Steuerungsmittel (3 oder 11) angeschlossen, ist/sind, welche die primäre (2) und/oder die sekundäre (8) Pumpe mit verstellbare Drehzahl steuern,
- das Regelventil (4) mit Steuerungsmitteln (5) assoziiert ist, welche das Regelventil (4) steuern,
- die Einspritzvorrichtung für neutrales Gas (6) ein neutrales Gas von einer Quelle eines neutralen Gases (7) über ein Einspritzrohr (7a), welches mit einem Einspritzventil (7b) und mit Steuerungsmitteln (7c) für die Steuerung des Einspritzventils (7b) ausgestattet ist, einspritzt,
- ein zentrales Steuerungsmittel (10) wie beispielsweise ein Mikroprozessor oder ein Mikrocontroller die jeweiligen Steuerungsmittel (3, 11, 5, 7c) der primären (2) und/oder der sekundären (8) Pumpe, des Regelventils (4) und des Einspritzventils (7b) steuert.

5. Pumpsystem nach Anspruch 4, **dadurch gekennzeichnet, dass** das zentrale Steuerungsmittel (10) die Signale erzeugt, welche die jeweiligen Steuerungsmittel (3, 11, 5, 7c) entsprechend einem von einer Einstellvorrichtung (13) empfangenen Sollsignal, entsprechend den Informationen in Bezug auf die Öffnungsposition des Regelventils (4) und des Einspritzventils (7b), und entsprechend den von einem Drucksensor (12) abgegebenen Messungen des Drucks der Prozesskammer (1) steuern.

6. Anlage zur Herstellung von Halbleitern oder mechanischen mikroelektronischen Systemen (MEMS) mit mindestens einer Prozesskammer (1) und einem Pumpsystem nach einem beliebigen der Ansprüche 1 bis 5.

7. Verfahren zur Herstellung von Halbleitern oder mechanischen mikroelektronischen Systemen (MEMS), wobei man die innere Atmosphäre einer Prozesskammer (1) anhand eines Pumpsystems nach einem beliebigen der Ansprüche 1 bis 5 pumpt.

8. Verfahren nach Anspruch 7, **dadurch gekennzeichnet, dass** man die Öffnung des Regelventils (4) derart steuert, dass die schnellen Veränderungen mit kleiner Amplitude der Druck- und Einspritzmengenverhältnisse des Gases in der Prozesskammer (1) kompensiert werden, dass man anschließend die Einspritzmenge der Einspntzvorrichtung für neutrales Gas (6) derart steuert, dass die Veränderungen mit größerer Amplitude der Druck- und Einspeitzmengenverhältnisse des Gases in der Prozesskammer (1) kompensiert werden, und dass man die Drehzahl der primären (2) und/oder der sekundären (8) Pumpe derart steuert, dass die längerfristigen Tendenzen und die großen Amplitudenveränderungen der Druck- und Einspritzmengenverhältnisse des Gases in der Prozesskammer (1) kompensiert werden.
